Europäisches Patentamt

European Patent Office

Office européen des brevets

(11) Veröffentlichungsnummer: **0 200 809**
A2

# (12) EUROPÄISCHE PATENTANMELDUNG

(21) Anmeldenummer: 85106783.5

(22) Anmeldetag: 01.06.85

(51) Int. Cl.⁴: **F 01 M 5/00,** F 01 M 1/10,
B 01 D 35/18

(30) Priorität: 13.03.85 DE 3508834

(71) Anmelder: **Ing. Walter Hengst GmbH & Co. KG,
Nienkamp 75, D-4400 Münster (DE)**

(43) Veröffentlichungstag der Anmeldung: **12.11.86
Patentblatt 86/46**

(72) Erfinder: **Baumann, Dieter, Dipl.-Ing.,
Überwasserstrasse 10, D-4402 Gimbte (DE)**

(84) Benannte Vertragsstaaten: **AT BE CH DE FR GB IT LI LU
NL SE**

(74) Vertreter: **Patentanwälte Schulze Horn und Hoffmeister,
Goldstrasse 36, D-4400 Münster (DE)**

(54) Ölfilter mit integriertem Wärmetauscher.

(57) Ölfilter mit integriertem Wärmetauscher, insbesondere für Kraftfahrzeugmotoren, bestehend aus einem Filtereinsatz und einem den Einsatz aufnehmenden Filtergehäuse, das einen mit dem Motor verbundenen Sockel aufweist, und wobei das Öl an der Sockelunterseite vom Motor kommend randseitig in den Sockel einströmt und nach Durchströmen von Zulaufkanälen im Sockel und des Filtereinsatzes durch einen den Sockel in Längsrichtung durchsetzenden zentralen Ablaufkanal zum Motor abfließt, bei dem der Sockel (4) zusätzlich wenigstens einen Kanal (6) für die Führung eines Kühlmittels aufweist und die Kanäle (7) für das Öl und der Kanal/die Kanäle (6) für das Kühlmittel derart in wärmeleitendem Kontakt angeordnet sind, daß Öl und Kühlmittel weitgehend im Gegenstrom zueinander unter Wärmeaustausch fließen.

## Ölfilter mit integriertem Wärmetauscher

Die Erfindung betrifft einen Ölfilter mit integriertem Wärmetauscher, insbesondere für Kraftfahrzeugmotoren, bestehend aus einem Filtereinsatz und einem den Einsatz aufnehmenden Filtergehäuse, das einen mit dem Motor verbundenen Sockel aufweist, und wobei das Öl an der Sockelunterseite vom Motor kommend randseitig in den Sockel einströmt und nach Durchströmen von Zulaufkanälen im Sockel und des Filtereinsatzes durch einen den Sockel in Längsrichtung durchsetzenden zentralen Ablaufkanal zum Motor abfließt.

Aus der DE-OS 33 17 008 ist ein Filter mit integriertem Wärmetauscher bekannt. Bei diesem Filter erfolgt der Wärmetausch in dem den Filtereinsatz vollständig umgebenden Filtergehäuse. Hierzu ist im Gehäuse ein zusätzlicher, außenliegender Ringraum vorgesehen, der von einem Kühlmedium im wesentlichen im Querstrom zu dem zu filternden und zu kühlenden bzw. zu erwärmenden Medium durchströmt wird.

Nachteilig bei diesem Filter ist, daß die Wärmeaustauschfläche relativ klein und damit der Wirkungsgrad gering ist und daß die Baugröße, hier vor allem der Durchmesser des Filtergehäuses, durch das Integrieren des Wärmetauschers erheblich vergrößert wird, was bei den häufig beengten Verhältnissen in Pkw-Motorräumen zu Problemen führt.

Es stellt sich daher die Aufgabe, einen Ölfilter der eingangs genannten Art zu schaffen, der die genannten Nachteile vermeidet und in dem ohne Zunahme der Baugröße ein Wärmeaustauscher mit hohem Wirkungsgrad integriert ist und der rationell und kostengünstig herstellbar ist.

Die Lösung der Aufgabe gelingt erfindungsgemäß durch einen Ölfilter der eingangs genannten Art nach dem kennzeichnenden Teil des Anspruchs 1.

Durch die Integration des Wärmeaustauschers in den ohnehin vorhandenen Sockel des Filtergehäuses wird die Anforderung der Baugrößenminimierung in idealer Weise gelöst, während der hohe Wirkungsgrad des Wärmeaustauschers durch die Führung der beiden Medien im Gegenstrom erreicht wird.

Eine Ausgestaltung der Erfindung sieht die folgenden Merkmale vor:
- wenigstens einen konzetrisch um den zentralen Ablaufkanal angeordnet, von dem Kühlmittel zirkular durchströmten Kanal und
- durch zum Ablaufkanal konzentrisch wenigstens in einem Abstand in zwei Ebenen übereinander angeordnete, gegeneinander winkelversetzte und jeweils zu zweit übereinander durch einen Durchlaß in Verbindung stehende, in Gegenstromrichtung zum Kühlmittel öldurchströmte kammerartige Kanäle, deren Wandungen wenigstens teilweise zugleich die Wandungen des Kühlmittelkanals / der Kühlmittelkanäle bilden.

Durch die konzentrische Anordnung der Kanäle wird eine optimale Raumausnutzung erreicht, die keinen toten Raum enthält. Die zirkulare Strömung des Kühlmittels wird dadurch erreicht, daß Kühlmitteleinlaß und -auslaß nahe benachbart diesseits bzw. jenseits einer radial verlaufenden Trennwand liegen, so daß das durchfließende Kühlmittel einen angenäherten 360$^{\circ}$-Bogen beschreibt. Dies ergibt eine eindeutig definierte, einheitliche Strömungsrichtung des Kühlmediums im Wärmetauscher. Die eng benachbarte Lage von Kühlmitteleinlaß und -auslaß erlaubt eine platzsparende, parallele Führung der zugehörigen Leitungen bzw. Schläuche. Die Querschnittsform des Kühlmittelkanals ist vorzugsweise die eines hohen, schmalen Rechteckes, da so eine relativ große Wandungsfläche bei einem geringen radialen Platzbedarf erzielt wird.

Um das zu filternde und zu kühlende Motoröl in den für einen guten Wirkungsgrad vorteilhaften Gegenstrom zum Kühlmittel zu bringen, ist die beschriebene Anordnung von kammerartigen Kanälen vorgesehen. Die Kammerquerschnittsform ähnelt der des Kühlmittelkanals, hat aber nur etwa deren halbe Höhe. Die zirkulare Erstreckung der Kammern ist so bemessen, daß diese die Höhe der Kammern deutlich übertrifft. Nach dem Einströmen in eine Kammer der unteren Ebene an deren einem Ende fließt also das Öl in zirkularer Richtung, d. h. der Haupterstreckungsrichtung der Kammer bis zum gegenüberliegenden Ende, steigt von dort durch einen Durchlaß in eine Kammer der oberen Ebene und verläßt diese an deren Ende nach oben und tritt in den Filtereinsatz ein. Je nach Höhe und Durchmesser des Filtersockels sowie Abstand der Kammern vom zentralen Kanal kann eine Anordnung mindestens je zwei Kammern pro Ebene umfassen, es kann aber auch eine größere Anzahl sein. Auch können in radialer Richtung gesehen mehrere Kammeranordnungen und Kühlmittelkanäle vorhanden sein.

Zu einer guten Wärmeübertragung trägt weiterhin bei, daß die Wandungen zum großen Teil auf einer Seite vom Öl und auf der anderen vom Kühlmittel überstrichen werden. Den Wärmeübergang behindernde Grenzflächen oder Zwischenräume sind nicht vorhanden.

Der günstigste Strömungsverlauf des Öls ergibt sich in den Kammern, wenn die beiden miteinander verbundenen Kammern um einen solchen Winkel gegeneinander zirkular versetzt sind, daß die Überschneidung gerade noch die für den Durchlaß erforderliche Größe hat. Hierdurch wird das bestmögliche Verhältnis von zirkularem zu axialem Strömungsweg erreicht, so daß zwischen Öl und Kühlmittel weitgehend ein Gegenstrom besteht. Lediglich im Bereich von Kühlmitteleinlaß und -auslaß und zentralem Ablaufkanal ist dies nicht der Fall.

Eine bevorzugte Ausführungsform des Ölfilters sieht vor, daß der Sockel drei konzentrische, parallel durchströmte Kanäle für das Kühlmittel und zwischen diesen zwei konzentrische Kammeranordnungen für das Öl aufweist. Hiermit wird einerseits eine genügend große Wärmeaustauschfläche erreicht, andererseits wird aber noch ein ausreichend großer Kanalquerschnitt gewährleistet, bei dem Druckverluste von Öl und Kühlmittel noch nicht zu hoch werden.

Bei glattflächigen Wandungen der Kanäle stellt sich eine im wesentlichen laminare Strömung im Öl und im Kühlmittel ein, was einen Temperaturgradienten im fließenden Medium zur Folge hat. Hierbei erwärmen sich die wandungsnahen Schichten des Kühlmittels und die mittleren Schichten des Kühlmittels bleiben kühler. Umgekehrtes gilt für das Öl. Abhilfe schafft hier die Erzeugung von Turbulenzen, die eine gleichmäßigere Wärmeverteilung in den fließenden Medien und damit einen verstärkten Wärmeaustausch bewirken. Hierfür sind Rippen oder Vorsprünge auf den Wandungen der Kanäle und Kammern, bevorzugt auf den wärmeaustauschenden Wandungen, vorgesehen. Die Rippen erstrecken sich sinnvollerweise senkrecht zur Strömungsrichtung, d. h. parallel zum zentralen Ablaufkanal, um bestmöglich für eine Verwirbelung zu sorgen. Parallel wird die Wärmeaustauschfläche hierdurch weiter vergrößert.

Weiterhin vorteilhaft ist es, wenn die Rippen abwechselnd auf einander gegenüberliegenden Wandungen eines Kanals angeordnet sind und eine Höhe haben, die etwa bis zur Mitte des Kanals reicht. Es wird so zusätzlich ein mäandrierender Fluß der Medien und so ein verlängerter Fließweg mit dem Ergebnis eines verbesserten Wärmeaustausches erzielt.

Zur Verbesserung des Wärmeaustausches durch die Wandung des zentralen Ablaufkanals ist dieser vorteilhaft auf seiner Innenseite mit in Strömungsrichtung des Öls verlaufenden Rippen versehen. So wird die Wärmeaustauschfläche vergrößert, der Durchflußwiderstand aber nicht mehr nennenswert erhöht.

Um eine kostengünstige und rationelle Herstellung zu gewährleisten, ist vorgesehen, daß der Sockel aus zwei ineinandergesetzten, gegeneinander abgedichteten Teilen besteht, nämlich aus einem Becherteil mit dem zentralen Ablaufkanal und einem Einsatzteil. Der Einsatzteil umfaßt zumindest eine ringförmige Kammeranordnung, kann aber auch zwei oder mehr derartiger Anordnungen aufweisen. Die Abdichtung der beiden Teile gegeneinander kann beispielsweise durch O-Ringe oder auch durch Verklebung erfolgen. Nach oben werden die ineinandergesteckten Teile durch das den Filtereinsatz aufnehmende Gehäuse abgedeckt bzw. verschlossen. Durch die beschriebene Konstruktion des Sockels in zwei Teilen wird der Montageaufwand bei der Herstellung sehr gering.

Besonders vorteilhaft ist es, zumindest die wärmeaustauschenden Wandungen aus Aluminium herzustellen. Aluminium hat sowohl eine gute Wärmeleitfähigkeit als auch ein geringes Gewicht und läßt sich sehr leicht bearbeiten.

Besondere wirtschaftliche Vorteile ergeben sich daraus, daß vorgesehen ist, zumindest den Becherteil und den Einsatzteil im Druckgußverfahren herzustellen. Dies ist bei der beschriebenen Ausführung der Sockelteile problemlos möglich, da die Voraussetzung der Entformbarkeit, d. h. die Möglichkeit, Gußformen nach dem Gießen von dem Gußteil einfach zu trennen, gegeben ist. Nach dem Guß ist lediglich eine Bearbeitung von geringem Umfang erforderlich.

Der erfindungsgemäße Ölfilter mit integriertem Wärmeaustauscher ist damit im Vergleich zu bekannten derartigen Ölfiltern sowohl rationeller und kostengünstiger herstellbar als auch wirkungsvoller.

Eine bevorzugte Ausführungsform der Erfindung wird im folgenden anhand einer Zeichnung näher beschrieben. Es zeigen im einzelnen:

Figur 1 einen erfindungsgemäßen Ölfilter in Vertikalschnitt,

Figur 2 einen Filtersockel des erfindungsgemäßen Ölfilters im Horizontalschnitt entlang der Linie A - A in Figur 1 und

Figur 3 eine Anordnung von kammerartigen Kanälen im Filtersockel in abgerollter Darstellung.

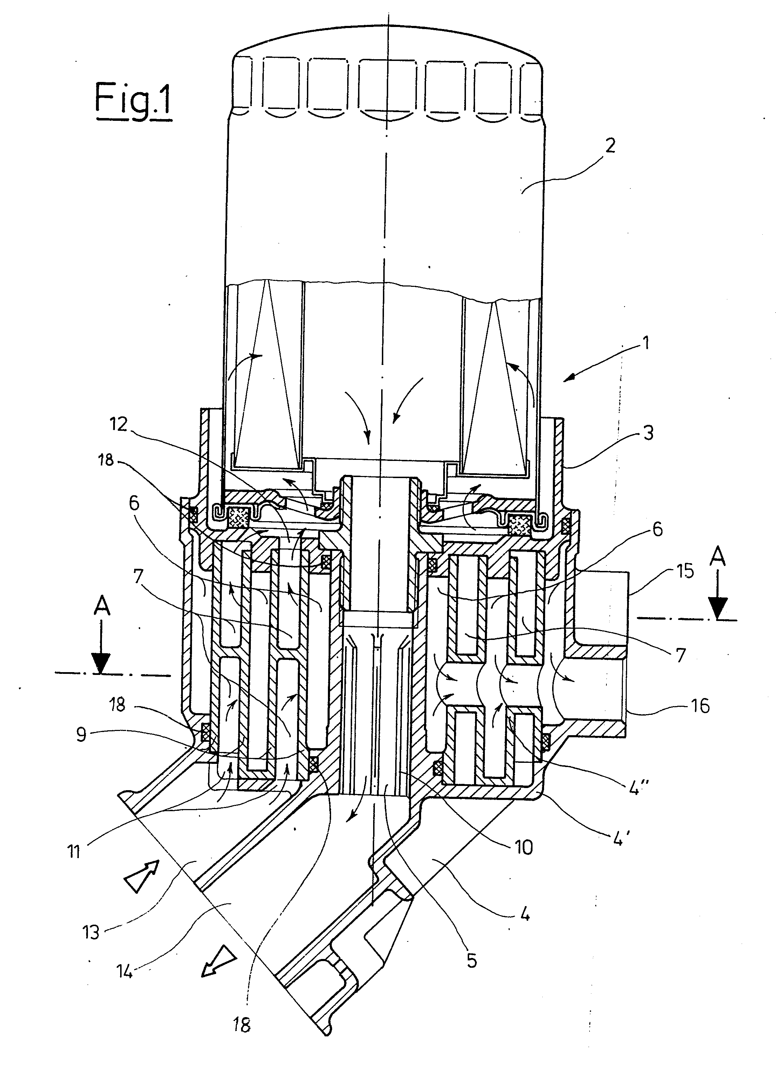

Wie Figur 1 zeigt, besteht der erfindungsgemäße Ölfilter 1 aus einem einen Filtereinsatz 2 aufnehmenden Filtergehäuse 3, das auf einem Filtersockel 4 angeordnet ist. Das Gehäuse 3 umgibt den Filtereinsatz 2 nur in seinem unteren Teil, da im Ausführungsbeispiel eine Wegwerf-Filterpatrone eingesetzt ist.

Der Filtersockel 4 besteht aus zwei Teilen 4' und 4",
nämlich einem Becherteil 4' (Schraffur nach rechts steigend) und einem Einsatzteil 4" (Schraffur nach links
steigend). In seiner Mitte weist der Becherteil 4' einen
zentralen, in Richtung der Längsachse des Ölfilters 1
verlaufenden Ablaufkanal 5 auf. Dieser mündet im unteren
Teil des Sockels 4 in eine Leitung 14, die zu einem
Motor (nicht dargestellt) führt. Parallel hierzu verläuft eine zweite, vom Motor kommende Leitung 13. Beide
Leitungen 13 und 14 dienen zur Führung von Motoröl.

In den Becherteil 4' ist der Einsatzteil 4" unter Abdichtung mittels Dichtungen 18 gegen den Becherteil 4'
eingesetzt. Der Einsatzteil 4" weist im dargestellten
Beispiel der Erfindung vier zueinander und zum zentralen
Ablaufkanal 5 parallele Wandungen 9 auf, wodurch im
Zusammenwirken mit dem Becherteil 4' Kanäle 6 und 7
gebildet werden, deren Querschnittsform der eines hohen
schmalen Rechteckes entspricht. Die Kanäle 7 dienen der
Führung des Öls, das durch Einlässe 11 an der Unterseite
der Kanäle 7 dorthin gelangt. Die Verbindung der Kanäle
7 mit dem Filtergehäuse 3 bzw. dem darin befindlichen
Filtereinsatz 2 stellen Auslässe 12 an den oberen Enden
der Kanäle 7 her. Die Kanäle 6, die sich in radialer
Richtung gesehen mit den Kanälen 7 abwechseln, dienen
der Führung eines Kühlmittels, das zweckmäßig Kühlwasser
aus dem Motorkühlwasserkreislauf ist. Nach oben sind die
Kühlmittelkanäle 6 durch die Unterseite des Filtergehäuses 3 verschlossen, so daß zwei völlig getrennte
Kreisläufe gegeben sind, bei denen eine Vermischung von
Öl und Kühlmittel ausgeschlossen ist.

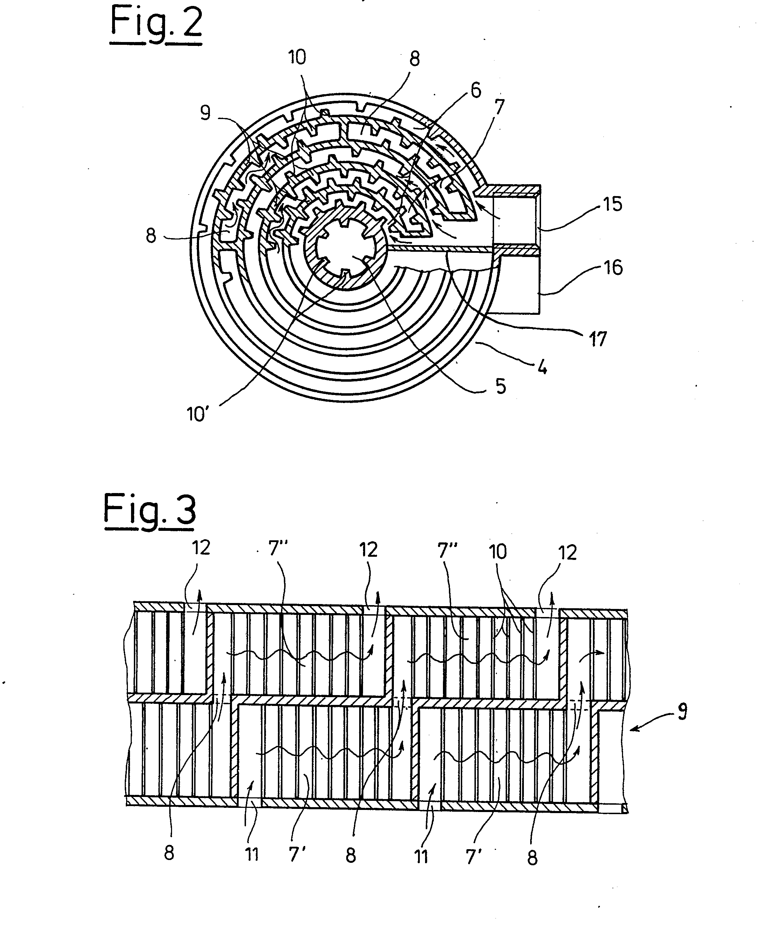

Die wechselweise Anordnung der Kanäle 6 und 7 für Kühlmittel und Öl zeigt besonders deutlich Figur 2, die
einen Schnitt entlang der Linie A - A in Figur 1 zeigt.

In der Mitte ist der zentrale Ablaufkanal 5 zu erkennen, der auf seiner Innenseite oberflächenvergrößernde Rippen 10' aufweist, die in Richtung der Ölströmung verlaufen. Das Kühlmittel gelangt durch einen Einlaufstutzen 15 an der Außenseite des Sockels 3 in die Kanäle 6, die mit unterschiedlichen Abständen konzentrisch zum Ablaufkanal 5 angeordnet sind. Die Kanäle 6 beschreiben einen angenäherten 360°-Bogen und enden an einem Auslaßstutzen 16 zum Abführen des Kühlmittels, wobei die Trennung vom Einlaß durch eine Trennwand 17 erfolgt. Zwischen den drei Kühlmittelkanälen 6 sind zwei Kanäle 7 zur Führung des Öls angeordnet, wobei diese in von einem Einlaß 8 bis zum nächsten Einlaß 8 sich erstreckende Teilabschnitte unterteilt sind.

Die Gestaltung der Kanäle 7 wird besonders deutlich aus der in Figur 3 gezeigten abgerollten Darstellung eines Teiles einer Wandung 9 eines Kanals 7. Der Kanal 7 ist in kammerartige Kanäle 7' und 7", angeordnet in zwei übereinanderliegenden Ebenen, unterteilt, wobei die Längenerstreckung der Kanäle bzw. Kammern 7' und 7" größer ist als deren Höhe. An einer der unteren Ecken der unteren Kammern 7' ist jeweils ein Einlaß 11 angeordnet, durch den Öl in die Kammer 7' einströmt. An der diagonal gegenüberliegenden Ecke ist ein Durchlaß 8 vorhanden, der seinerseits am Anfang einer Kammer 7" der oberen Ebene liegt. Die obere Kammer 7" verfügt wiederum diagonal gegenüber dem Durchlaß 8 über einen Auslaß 12. Diese Anordnung von je zwei versetzt übereinander angeordneten Kammern 7' und 7" wiederholt sich je nach dem verfügbaren Raum, abhängig vom Abstand vom zentralen Ablaufkanal 5, ein- bis mehrmal.

Durch Rippen 10 auf den Wandungen 9 wird die Wärmetauscherfläche vergrößert und es werden Turbulenzen in den fließenden Medien erzeugt. Höhe, Anzahl und Abstand der Rippen 10 liegen im Ermessen des Fachmannes und richten sich nach den Erfordernissen bezüglich Wärmeaustausch und Druckverlust. Auch eine Ausführung des Sockels ohne Rippen oder mit Rippen nur in einem Teil der Kanäle ist denkbar.

Schließlich wird im folgenden noch kurz die Funktionsweise des erfindungsgemäßen Ölfilters mit integriertem Wärmeaustauscher erläutert.

Das zu filternde Motoröl gelangt durch die Leitung 13 vom Motor kommend in den Sockel 4 des Ölfilters. Von dort wird es durch die Einlässe 11 in die kammerartigen Kanäle bzw. Kammern 7' verteilt. Nach dem Durchströmen der Kammern 7' der unteren Ebene in zirkularer Richtung, im Beispiel mit dem Uhrzeigersinn, folgt der Übergang in die Kammern 7" der oberen Ebene durch die Durchlässe 8. Die Kammern 7" werden ebenfalls in zirkularer Richtung im Uhrzeigersinn vom Öl durchströmt und durch Auslässe 12 verlassen. Weiter fließt das Öl durch das Filtergehäuse 3 und den Filtereinsatz 2 in den zentralen Ablaufkanal 5 und von dort durch die Leitung 14 zurück zum Motor.

Parallel hierzu strömt durch den Einlaßstutzen 15 Kühlmittel, i. a. Kühlwasser in die Kanäle 6 ein, durchfließt diese in zirkularer Richtung entgegengesetzt zum Öl, also gegen den Uhrzeigersinn und tritt durch den Auslaßstutzen 16 wieder aus und wird z. B. in den Kühlwasserkreislauf des Motors zurückgeführt.

Durch die gemeinsamen Wandungen 9 der Kanäle 6 und Kammern 7' und 7" findet ein Wärmeaustausch statt, dessen Effektivität dadurch, daß die aneinander vorbeifließenden Medien - Kühlmittel und Öl - im Gegenstrom fließen, sehr hoch ist. Der Hauptzweck des Wärmeaustauschers ist die Kühlung des mit hoher Temperatur vom Motor kommenden Öls. In der Kaltstartphase ist aber auch der umgekehrte Effekt vorteilhaft, denn das Kühlwasser erwärmt sich schneller als das Motoröl. Somit gibt in der Kaltstartphase das schon erwärmte Kühlwasser Wärme an das Öl ab, wodurch dessen Fließ- und Schmierfähigkeit in wünschenswerter Weise verbessert wird.

Patentansprüche:

1. Ölfilter mit integriertem Wärmetauscher, insbesondere für Kraftfahrzeugmotoren, bestehend aus einem Filtereinsatz und einem den Einsatz aufnehmenden Filtergehäuse, das einen mit den Motor verbundenen Sockel aufweist, und wobei das Öl an der Sockelunterseite vom Motor kommend randseitig in den Sockel einströmt und nach Durchströmen von Zulaufkanälen im Sockel und des Filtereinsatzes durch einen den Sockel in Längsrichtung durchsetzenden zentralen Ablaufkanal zum Motor abfließt,
dadurch gekennzeichnet, daß der Sockel (4) zusätzlich wenigstens einen Kanal (6) für die Führung eines Kühlmittels aufweist und daß die Kanäle (7) für das Öl und der Kanal/die Kanäle (6) für das Kühlmittel derart in wärmeleitendem Kontakt angeordnet sind, daß Öl und Kühlmittel weitgehend im Gegenstrom zueinander unter Wärmeaustausch fließen.

2. Ölfilter nach Anspruch 1, gekennzeichnet durch wenigstens einen konzentrisch um den zentralen Ablaufkanal (5) angeordneten, von dem Kühlmittel zirkular durchströmten Kanal (6) und
durch zum Ablaufkanal (5) konzentrisch wenigstens in einem Abstand in zwei Ebenen übereinander angeordnete, gegeneinander winkelversetzte und jeweils zu zweit übereinander durch einen Durchlaß (8) in Verbindung stehende, in Gegenstromrichtung zum Kühlmittel öldurchströmte, kammerartige Kanäle (7', 7"), deren Wandungen (9) wenigstens teilweise zugleich die Wandungen (9) des Kühlmittelkanals / der Kühlmittelkanäle (6) bilden.

3. Ölfilter nach den Ansprüchen 1 und 2, dadurch gekennzeichnet, daß die übereinander angeordneten, miteinander verbundenen Kammern (7', 7") derart gegeneinander winkelversetzt sind, daß eine Überschneidung von der Breite des Durchlasses (8) verbleibt.

4. Ölfilter nach den Ansprüchen 1 bis 3, dadurch gekennzeichnet, daß der Sockel (4) drei konzentrische Kanäle (6) für das Kühlmittel und zwischen diesen zwei konzentrische Kammeranordnungen (7', 7") für das Öl aufweist.

5. Ölfilter nach den Ansprüchen 1 bis 4, dadurch gekennzeichnet, daß wenigstens ein Teil der wärmetauschenden Wandungen (9) der Kanäle und Kammern (6, 7', 7") parallel zum zentralen Ablaufkanal (5) verlaufende Rippen oder Vorsprünge (10) aufweist.

6. Ölfilter nach den Ansprüchen 1 bis 5, dadurch gekennzeichnet, daß der Ablaufkanal (5) auf seiner Innenseite in Strömungsrichtung verlaufende Rippen (10') aufweist.

7. Ölfilter nach den Ansprüchen 1 bis 6, dadurch gekennzeichnet, daß der Sockel aus zwei ineinandergesetzten, gegeneinander abgedichteten Teilen (4', 4") besteht, nämlich aus einem Becherteil (4') mit dem zentralen Ablaufkanal (5) und einem Einsatzteil (4").

8. Ölfilter nach den Ansprüchen 1 bis 7, dadurch gekennzeichnet, daß zumindest die wärmetauschenden Wandungen (9) aus Aluminium bestehen.

9. Ölfilter nach den Ansprüchen 1 bis 8, dadurch gekennzeichnet, daß zumindest der Becherteil (4') und der Einsatzteil (4") im Druckgußverfahren hergestellt sind.

Fig.1

0200809

## Fig.2

## Fig.3